# FASCICULE DE BREVET EUROPEEN

(11) **EP 1 779 701 B1**
(45) Date de publication et mention de la délivrance du brevet: **12.12.2007**
(21) Numéro de dépôt: 05777518.1
(22) Date de dépôt: 16.08.2005
(51) Int. Cl.: H04Q 7/38

(54) **PROCEDE DE GESTION DE RESSOURCES DANS UN SYSTEME DE COMMUNICATION ET EQUIPEMENTS POUR LA MISE EN OEUVRE DU PROCEDE**
VERFAHREN ZUR BETRIEBSMITTELVERWALTUNG IN EINEM KOMMUNIKATIONSSYSTEM UND GERÄTE ZUR AUSFÜHRUNG DES VERFAHRENS
METHOD FOR MANAGING RESOURCES IN A COMMUNICATION SYSTEM AND EQUIPMENT FOR CARRYING OUT SAID METHOD

(30) Priorité: 16.08.2004 FR 0408900
(43) Date de publication de la demande: 02.05.2007
(73) Titulaire: Nortel Networks Limited, St Laurent, Québec H4S 2A9 (CA)
(72) Inventeur: FAUCONNIER, Denis, F-78470 Saint Rémy les Chevreuse (FR); BOUMENDIL, Sarah, F-75016 Paris (FR)
(74) Mandataire: Attali, Pascal
(86) Numéro de dépôt international: PCT/EP2005/008849
(87) Numéro de publication internationale: WO 2006/018265

(56) Documents cités:
- "Feasibility study for enhanced uplink for UTRA FDD (Release 6) 3GPP TR 25.896" 3RD GENERATION PARTNESHIP PROJECT; TECHNICAL SPECIFICATION GROUP RADIO ACCESS NETWORK, [Online] mars 2004 (2004-03), pages 1-26, XP002322111 Extrait de l'Internet: URL:www.3gpp.org> [extrait le 2005-03-22]
- ERICSSON: "Enhanced Uplink - Scheduling; R1-040683" TSG-RAN WG1 #38, [Online] 21 juin 2004 (2004-06-21), pages 1-6, XP002322112 Extrait de l'Internet: URL:www.3gpp.org> [extrait le 2005-03-22]
- NEC: "Comparison of per-UE, per-flow, per-cell basis signalling in rate scheduling; R1-040596" TSG-RAN WORKING GROUP 1, [Online] 10 mai 2004 (2004-05-10), pages 1-5, XP002322113 MONTREAL, CANADA Extrait de l'Internet: URL:www.3gpp.org> [extrait le 2005-03-22]

## Description

La présente invention concerne la gestion de ressources dans un système de communication.

Elle trouve une application particulière, bien que non exclusive, dans un système de communication de type UMTS ("Universal Mobile Telecommunication System"), utilisant une fonctionnalité de transmission d'informations à haut débit du type "FDD enhanced uplink".

Le "FDD enhanced uplink", qui fait actuellement l'objet d'une standardisation, est notamment décrit dans la spécification technique TS 25.309, V0.2.0, "FDD Enhanced Uplink ; Overall description ; Stage 2 (Reléase 6)", publiée en juin 2004, par le 3GPP ("3^{rd} Generation Partnership Project"). Cette fonctionnalité permet notamment de transmettre de l'information à haut débit depuis un terminal radio (ou UE, pour "User Equipment") vers une ou plusieurs stations de base (ou "Node B"), sur un canal de transport dédié appelé E-DCH ("Enhanced - Dedicated CHannel").

Une des spécificités du "FDD enhanced uplink" réside dans la possibilité, pour chaque station de base, de contrôler directement les ressources de communication sur le E-DCH, dans certaines limites fixées par le contrôleur de réseau radio (ou RNC, pour "Radio Network Controller"). Cette possibilité est désignée par "Node B controlled scheduling" dans la spécification technique TS 25.309 précitée.

Un tel fonctionnement diffère de la gestion des autres ressources de communication, comme pour les canaux dédiés classiques et les canaux communs, où c'est le RNC qui détermine les ressources à utiliser pour chaque UE, éventuellement après négociation avec ce dernier.

Le contrôle des ressources E-DCH par le Node B permet de prendre en compte des paramètres disponibles au niveau de ce Node B, comme un niveau d'interférence estimé sur les canaux montants. On s'assure ainsi que les transmissions effectuées par les UE sur des canaux E-DCH respectifs ne génèrent pas des interférences au-delà d'un niveau prédéterminé.

Un autre exemple de paramètre pouvant être pris en compte dans le contrôle des ressources par le Node B est la capacité de réception de ce Node B, c'est-à-dire le débit maximal en réception que ce Node B est capable de traiter. En effet, certaines opérations sont effectuées sur les signaux reçus par un Node B pour retrouver l'information qu'ils portent, comme un désétalement et un décodage notamment. Pour mener ces opérations de façon efficace, il peut donc être utile de limiter la quantité d'informations reçues au Node B.

A titre d'exemple, si un Node B a une capacité de réception de 6 Mbit/s et si les informations transmises sur les canaux montants communs et dédiés (autres que les E-DCH) à destination de ce Node B représentent déjà un débit cumulé de 2 Mbit/s, il est souhaitable que la somme des débits de transmission sur tous les E-DCH à destination de ce Node B, correspondant chacun à un UE, soit inférieure ou égale à 4 Mbit/s (=6-2 Mbit/s), sous peine de ne pouvoir réaliser efficacement les opérations de traitement requises au Node B et ainsi de ne pas retrouver toute l'information transmise par les UE.

Il s'avère donc nécessaire d'indiquer à chaque UE susceptible de communiquer sur un canal E-DCH à destination d'un Node B, le débit maximal que cet UE est autorisé à utiliser en transmission. Dans l'exemple précédent, si deux UE utilisent la fonctionnalité "FDD enhanced uplink", le Node B peut leur demander de limiter leur débit de transmission à 2 Mbit/s chacun, ou bien à 4 Mbit/s pour l'un et 0 Mbit/s pour l'autre par exemple.

Etant donné que le Node B peut choisir d'affecter un débit maximal différent pour chaque UE, il convient alors d'indiquer ce débit à chaque UE de façon individuelle, par exemple sur un canal dédié respectif. Toutefois, un tel mécanisme est lui-même consommateur en ressources. Si les informations de débit maximal à utiliser sont transmises par poinçonnage de bits sur un canal de trafic descendant, c'est-à-dire en remplaçant certains bits de données utiles par lesdites informations de débit maximal, ce mécanisme peut en outre dégrader la réception des informations transmises sur ce canal descendant.

Ce phénomène est accentué par le fait que les ressources de communication utilisées pour les canaux autres que les E-DCH, c'est-à-dire les canaux montants dédiés et communs classiques, sont affectées de façon préalable par le RNC. Or, l'utilisation des ressources varie, en particulier sur les canaux dédiés, si bien que la bande passante disponible au Node B pour recevoir des informations, dans la limite des capacités du Node B, change au cours du temps. Si l'on veut profiter d'un maximum de débit sur les canaux E-DCH, il conviendrait donc de mettre à jour régulièrement les seuils de débit à ne pas dépasser pour chaque UE. La signalisation en résultant, par exemple sur des canaux dédiés descendants, peut alors poser problème.

Cela dit, il n'est pas non plus souhaitable de limiter les mises à jour des seuils de débit à appliquer par chaque UE pour éviter une signalisation trop importante, car cela mènerait soit à restreindre inutilement le débit et la capacité sur les canaux E-DCH dans le cas où les seuils de débit fixés sont trop faibles, ce qui est contraire à leur objectif, soit à dégrader durablement la qualité de réception dans le cas où les seuils de débit fixés sont trop élevés.

Un autre problème apparaît en outre lorsqu'un UE est susceptible de transmettre des données sur un canal E-DCH à destination de plusieurs Nodes B simultanément, c'est-à-dire lorsque cet UE est en situation de macrodiversité (ou "soft handover").

Dans ce cas en effet, chaque Node B de l'ensemble actif avec lequel l'UE communique possède des critères qui lui sont propres, tant en termes d'interférences mesurées que de capacité de réception. La gestion de ressources E-DCH étant délocalisée au niveau du Node B comme indiqué plus haut, il est alors possible que chaque Node B transmette à l'UE un seuil de débit différent à ne pas dépasser, sans concertation avec les autres Nodes B de l'ensemble actif. Il est ainsi difficile pour l'UE d'obtenir la totalité des informations de seuils de la part des différents Nodes B et de déterminer le débit maximal qu'il doit finalement appliquer à partir des informations reçues.

L'état le l'art le plus proche, le document "Feasibility study for enhanced uplink for UTRA FDD (Release 6) 3GPP TR 25.896" 3RD GENERATION PARTNESHIP PROJECT; TECHNICAL SPECIFICATION GROUP RADIO ACCESS NETWORK, [Online] mars 2004 (2004-03), pages 1-26, XP002322111 Extrait de l'Internet: URL:www.3gpp.org>, décrit un système UMTS avec des canaux à haut débit montant (titre "Enhanced dedicated channel). Ces derniers utilisent la bande passante laissée libre par les canaux dédiés à débit fixe (page 18, figure 7.1 montre que une partie seulement des Transport Format Combination (TFC) est allouée au Node B par le RNC. Ce groupe de TFC correspond au débit disponible au Node B pour les canaux haut débit montants laissé libre par les canaux dédiés à débit fixe et les canaux communs (page 17, lignes 4-11)).

Un but de la présente invention est de pallier les inconvénients mentionnés ci-dessus, en proposant une gestion des ressources qui réalise un bon compromis entre le débit de transmission et la qualité de réception.

Un autre but de l'invention est d'avoir une gestion efficace des ressources même en situation de macrodiversité.

L'invention propose ainsi un procédé de gestion de ressources dans un système de communication comprenant au moins une station de base apte à communiquer avec des terminaux radio sur des canaux communs et des canaux dédiés selon des débits déterminés, chaque station de base disposant en outre d'au moins une bande passante disponible, en fonction de l'utilisation de certains au moins des canaux communs et des canaux dédiés selon lesdits débits déterminés, pour recevoir des données depuis au moins un terminal radio sur au moins un canal montant dédié à haut débit. Le procédé comprend les étapes suivantes relativement à au moins une station de base :
/a/ déterminer, à la station de base, au moins une bande passante disponible pour recevoir des données depuis au moins un terminal radio sur au moins un canal montant dédié à haut débit ;
/b/ transmettre, sur un canal commun descendant, une première indication relative à ladite bande passante disponible ; et
/c/ transmettre, pour chaque terminal radio indépendamment, au moins une seconde indication relative à un pourcentage de ladite bande passante disponible à ne pas dépasser par ledit terminal radio lors d'une prochaine transmission sur ledit canal montant dédié à haut débit.

On transmet ainsi en deux temps au terminal les informations qui lui permettront de déterminer le débit maximal qu'il pourra utiliser sur son canal montant dédié à haut débit. Les deux transmissions envisagées peuvent être faites de façon indépendante, en particulier à des rythmes différents. On peut ainsi ne transmettre qu'une mise à jour de la première indication sans modifier le pourcentage relatif à un terminal. On peut aussi transmettre une indication dé pourcentage mise à jour pour un ou plusieurs terminaux, sans pour autant modifier la valeur de la bande passante disponible relative à la station de base.

La bande passante disponible est déterminée par exemple en tenant compte d'une capacité de réception maximale de ladite station de base, ou bien d'un niveau d'interférence estimé, dans le sens montant, à ladite station de base.

La transmission, pour chaque terminal radio indépendamment, de ladite seconde indication peut être effectuée sur un canal dédié descendant respectif.

La transmission, sur un canal commun descendant, de la première indication relative à ladite bande passante disponible est avantageusement effectuée de façon répétée dans des tranches temporelles successives dudit canal commun descendant. Ce mode de réalisation est particulièrement intéressant dans le cas où le terminal radio est susceptible d'être en situation de macrodiversité avec plusieurs stations de base, vis-à-vis de son canal montant dédié à haut débit.

Dans ce cas, le terminal radio écoutera avantageusement chacun des canaux communs reçus alternativement, de façon à obtenir la première indication relative à ladite bande passante disponible pour chacune des stations de base de l'ensemble actif. Le débit maximal à appliquer par le terminal radio dépendra alors des indications reçues depuis chacune des stations de base de cet ensemble actif.

L'invention propose également une station de base d'un système de communication comprenant des moyens pour gérer des ressources selon le procédé susmentionné.

L'invention propose en outre un terminal radio comprenant des moyens pour communiquer avec au moins une station de base d'un système de communication et des moyens pour transmettre des données à ladite station de base sur au moins un canal montant dédié à haut débit, ladite station de base étant agencée pour communiquer avec des terminaux radio sur des canaux communs et des canaux dédiés selon des débits déterminés et pour déterminer au moins une bande passante disponible pour recevoir des données depuis au moins un terminal radio sur au moins un canal montant dédié à haut débit. Le terminal radio comprend en outre :
- des moyens pour détecter, sur un canal commun descendant, une première indication relative à ladite bande passante disponible transmise par ladite station de base;
- des moyens pour recevoir au moins une seconde indication relative à un pourcentage de ladite bande passante disponible transmise par ladite station de base ; et
- des moyens pour déterminer, à partir desdites première et seconde indications, un débit maximal à ne pas dépasser lors d'une prochaine transmission sur ledit canal montant dédié à haut débit correspondant.

D'autres particularités et avantages de la présente invention apparaîtront dans la description ci-après d'exemples de réalisation non limitatifs, en référence aux dessins annexés, dans lesquels :
- la figure 1 est un schéma simplifié d'architecture d'un système de communication apte à mettre en oeuvre l'invention ;
- la figure 2 est une représentation en couches de protocoles de communication mis en oeuvre dans le système de communication apte à mettre en oeuvre l'invention.

L'invention est décrite ci-après dans le contexte d'un système de type UMTS utilisant la fonctionnalité "FDD enhanced uplink" de transmission de données à haut débit dans le sens montant. Il s'agit toutefois d'un exemple, l'invention pouvant être mise en oeuvre également dans d'autres systèmes de communication.

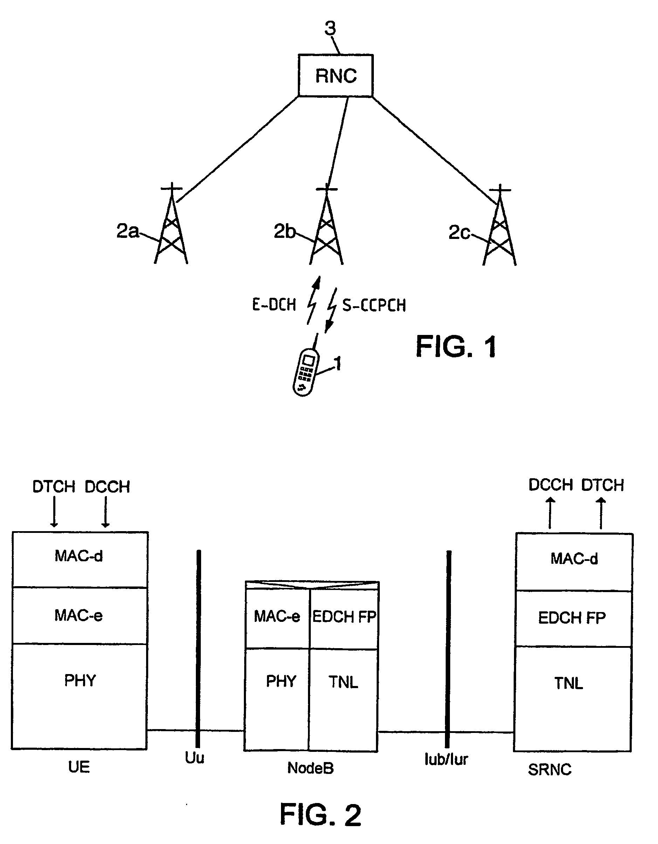

La figure 1 montre un exemple simplifié d'architecture de la partie radio d'un système de communication comprenant trois Nodes B 2a, 2b et 2c respectivement, reliés à un RNC 3. Un UE 1 est apte à communiquer avec certains au moins des Nodes B représentés. A cet effet, des canaux de transport dédiés peuvent être utilisés de façon classique pour transmettre de l'information de l'UE 1 vers un ou plusieurs des Nodes B (sens montant), ou bien pour transmettre de l'information depuis un ou plusieurs des Nodes B vers l'UE 1 (sens descendant). Ces canaux de transport dédiés, notés DCH ("Dedicated CHannel") se décomposent en canaux logiques de trafic DTCH ("Dedicated Traffic CHannel"), pour la transmission de données usager, et de contrôle DCCH ("Dedicated Control CHannel") pour la transmission de messages de signalisation. En outre, des canaux communs de type CCCH ("Common Control CHannel") peuvent être utilisés pour transmettre des messages de signalisation relativement à un ensemble d'UE situés sous la couverture radio d'un Node B.

Par ailleurs, l'UE 1 et le système de communication illustré sur la figure 1 supportent la fonctionnalité "FDD enhanced uplink". Ainsi, les ressources de communication de l'UE 1 sont contrôlées directement par le ou les Nodes B avec lesquelles il communique sur un canal dédié montant à haut débit de type E-DCH.

La figure 2 donne une représentation en couches de protocoles de communication mis en oeuvre dans un système tel que celui de la figure 1, conformément à la spécification technique TS 25.309 précitée. De façon classique, l'UE représenté possède une couche d'accès au médium (MAC-d, « Medium Access Control ») qui remplit une fonction de multiplexage des données sur les canaux de transport DTCH et DCCH, ainsi qu'une couche physique ("PHY") de l'interface radio sur laquelle il transmet les flux issus la couche MAC-d vers le Node B concerné. Une couche MAC-d correspondante est située dans le SRNC ("Serving RNC"), c'est-à-dire le RNC contrôlant la connexion avec l'UE considéré, et une couche PHY correspondante est située dans le Node B avec lequel l'UE est en communication.

Une couche MAC-e est en outre utilisée dans le cadre de la fonctionnalité "FDD enhanced uplink". Cette couche, qui contrôle les transmissions sur le canal E-DCH, est située dans l'UE et, de façon correspondante, dans le Node B. Elle assure notamment les fonctions suivantes : des processus hybrides de requête de retransmission des données de type HARQ (« Hybrid Automatic Repeat reQuest »), un contrôle des ressources relatives au canal E-DCH ("scheduling") et un multiplexage/démultiplexage des données sur le E-DCH. En particulier, la couche MAC-e permet la sélection d'un format de transport pour les blocs de données transmis sur le canal E-DCH. L'intervalle de temps de transmission (TTI) pour le canal E-DCH est de 2 ms ou de 10 ms.

Lorsque l'UE est en situation de macrodiversité, en ce qui concerne le canal à haut débit E-DCH, le SRNC assure un ré-ordonnancement et une recombinaison des données reçues depuis les différents Nodes B de l'ensemble actif.

On considère désormais que l'UE 1 de la figure 1 souhaite transmettre des données à haut débit sur un canal E-DCH à destination du Node B 2b. A cet effet, l'UE 1 reçoit du RNC 3 des ressources de communication, tels que des codes, configurés pour pouvoir écouler un débit variable pouvant atteindre une valeur maximale théorique. Comme cela a été expliqué en introduction, il est alors souhaitable que ce Node B 2b indique à l'UE 1 quel débit maximal il lui affecte, de manière à s'assurer que le niveau d'interférence global montant mesuré au Node B ne dépassera pas un certain seuil et/ou que la capacité de réception du Node B ne sera pas surpassée. L'UE 1 pourra ainsi être amené à n'utiliser les ressources qui lui ont été allouées par le RNC 3 que dans les limites fixées par le Node B 2b.

On notera que la bande passante disponible peut être déterminée en relation avec une capacité de réception maximale et/ou un niveau d'interférence montant estimé, sans pour autant être absolument calée sur ces valeurs. En particulier, il est possible de définir des marges par rapport à ces valeurs, de façon à s'assurer, par exemple, que le trafic montant n'aura pas un débit cumulé surpassant la capacité de réception maximale moins une marge prédéfinie. A l'inverse, il est possible de définir une bande passante disponible au-delà des valeurs susmentionnées, par exemple lorsqu'on détecte que des UE souhaitant communiquer sur des canaux E-DCH n'ont que peu d'impact sur le niveau d'interférence montant.

Selon l'invention, on procède en deux temps. Tout d'abord, le Node B 2b détermine une bande passante disponible, c'est-à-dire un débit maximal qu'il peut encore absorber, compte tenu des échanges d'informations déjà en cours sur les canaux dédiés et communs impliquant ce Node B.

Si l'on reprend l'exemple mentionné en introduction, le Node B 2b possède une capacité de réception de 6 Mbit/s, c'est-à-dire qu'il est capable d'effectuer un traitement (désétalement et décodage notamment) correct des signaux radio qu'il reçoit dans la limite d'un débit de transmission cumulé de 6 Mbit/s. Or, des canaux montants DTCH, DCCH et CCCH contrôlés par le RNC 3 utilisent déjà une certaine bande passante de ce Node B. Cette utilisation varie dans le temps et elle atteint par exemple un débit global de 2 Mbit/s à un instant donné considéré. La bande passante disponible au Node B 2b pour recevoir des données sur des canaux E-DCH est donc de 4 Mbit/s (=6-2 Mbit/s) à l'instant considéré.

Une fois déterminée au Node B 2b, cette bande passante disponible est communiquée à l'ensemble des UE qui se trouvent dans sa couverture radio, notamment à l'UE 1. Cette communication est réalisée sur un canal commun, tel qu'un S-CCPCH ("Secondary Common Control Physical CHannel"). L'indication de la bande passante disponible peut utiliser tout type de codage, comme une valeur absolue par exemple.

Le calcul et la transmission sur un canal commun descendant de l'indication relative à la bande passante disponible pour le Node B 2b peuvent être effectués de façon répétée, par exemple avec une période de 10 ms, comme cela sera décrit plus en détail par la suite. Ainsi, l'UE 1, comme l'ensemble des UE sous la couverture radio du Node B 2b, obtient l'information de la bande passante disponible relative au Node B 2b, à partir des indications reçues sur le canal commun descendant.

On notera que chaque Node B, comme le Node B 2b par exemple, peut couvrir plusieurs cellules radio avec lesquelles des UE sont en communication. Dans ce cas particulier, la bande passante disponible peut être définie au niveau cellule plutôt qu'au niveau du Node B, notamment lorsque cette bande passante est déterminée en référence à un niveau d'interférence montant. L'information correspondante, qui peut être différente selon les cellules sous la responsabilité du Node B en question, sera alors envoyée sur un canal commun de type S-CCPCH par chaque cellule.

Par la suite, le Node B 2b transmet une seconde indication à l'UE 1. Celle-ci consiste sensiblement en un pourcentage. Elle correspond à une fraction de la bande passante disponible précédemment transmise que l'UE 1 doit utiliser comme borne supérieure à son débit de transmission. Le codage utilisé pour transmettre l'information de pourcentage peut être de tout type. On comprend néanmoins qu'une telle information est de faible taille et peut être codée sur un nombre restreint de bits.

En reprenant l'exemple précédent, l'UE 1 a tout d'abord été informé que la bande passante disponible à un instant donné pour le Node B 2b était de 4 Mbit/s. On lui indique désormais un pourcentage de 50% par exemple. Cela signifie que le Node B 2b demande à l'UE 1 d'émettre sur son canal E-DCH avec un débit de transmission inférieur ou égal à 2 Mbit/s (= 50% x 4 Mbit/s).

Dans le même temps, le Node B 2b indique à d'éventuels autres UE situés dans sa zone de couverture radio et supportant la fonctionnalité "FDD enhanced uplink", quel pourcentage de la bande passante disponible préalablement communiquée chacun d'entre eux peut utiliser. Bien sûr, un pourcentage différent peut être indiqué à chaque UE. A cet effet, le Node B 2b peut prendre en compte tout critère pour la détermination des pourcentages à allouer aux différents UE, comme par exemple le nombre d'UE ayant ou requérant un canal E-DCH, le type de service requis par chaque UE, etc.

La transmission des pourcentages est effectuée de façon individuelle pour chacun des UE concernés. Par exemple, le pourcentage à appliquer par chaque UE peut lui être transmis sur un canal dédié descendant correspondant. A cet effet, le Node B 2b peut effectuer un poinçonnage sur un canal DTCH descendant par exemple, pour y incorporer l'information de pourcentage. Dans ce cas, seuls quelques bits d'information ont besoin d'être poinçonnés pour transmettre l'indication de pourcentage, ce qui évite une perte d'information et donc une dégradation de la qualité de réception des informations transmises sur le DTCH ayant fait l'objet du poinçonnage.

On notera que l'information de pourcentage est définie au niveau du Node B, même dans le cas où le Node B 2b couvre plusieurs cellules radio distinctes. Ainsi, une seule information de pourcentage est transmise à chaque UE en communication avec un Node B sur un canal dédié respectif.

La transmission de l'indication de pourcentage pour un UE donné, par exemple l'UE 1, peut être effectuée à un rythme différent de la transmission de la bande passante disponible évoquée plus haut. En particulier, l'indication de pourcentage peut être transmise uniquement sur demande de l'UE concerné. Des mises à jour peuvent aussi être envoyées par le Node B 2b lorsque les critères de détermination de tels pourcentages subissent un changement (par exemple un changement du nombre de canaux E-DCH à destination du Node B).

Lorsqu'il a reçu une indication de pourcentage, l'UE 1 est alors en mesure de l'appliquer à l'indication de la bande passante disponible qu'il a préalablement reçue, puis de calculer le débit maximal qu'il peut utiliser sur son canal E-DCH. Dans l'exemple mentionné plus haut, où la bande passante disponible transmise par le Node B 2b est de 4 Mbit/s et où le pourcentage revenant à l'UE 1 est de 50%, l'UE 1 en déduit qu'il peut transmettre un débit maximal de 2 Mbit/s (= 50% x 4 Mbit/s) sur son canal E-DCH. Il organise ensuite ses transmissions sur son canal E-DCH pour respecter la borne supérieure en débit ainsi calculée.

Une telle transmission en deux temps du débit maximal à utiliser, telle que décrite ci-dessus, présente un certain nombre d'avantages. Elle permet en effet d'éviter de transmettre des mises à jour très régulières de valeurs absolues de débit à chaque UE de façon indépendante, ce qui représenterait une quantité de signalisation importante, susceptible en outre de dégrader la qualité de réception des informations utiles notamment lorsque les débits sont transmis en poinçonnant des canaux de trafic descendants. A titre illustratif, si la bande passante disponible du Node B 2b évolue, suite à une modification des ressources utilisées sur des canaux de type DTCH par exemple, il suffira alors de transmettre une mise à jour de cette information sur un canal commun descendant, sans à avoir à retransmettre à chaque UE concerné une indication de débit modifiée en conséquence.

Dans un mode de réalisation avantageux de l'invention, plusieurs bandes passantes disponibles sont déterminées par le Node B considéré (ou chacune des cellules couvertes par ce Node B) puis transmises sur un canal commun descendant. Ces différentes bandes passantes sont choisies pour être associées à des niveaux de service respectifs à mettre en oeuvre par des UE. A titre d'exemple, une bande passante importante peut être réservée à l'usage des UE ayant un abonnement requérant un niveau de service élevé, tandis qu'une bande passante plus faible peut être utilisée par des UE requérant un niveau de service inférieur. De même, une bande passante importante peut être réservée à l'usage des communications ayant un niveau de priorité élevé, tandis qu'une bande passante plus faible peut être utilisée pour des communications avec un niveau de priorité inférieur.

Par ailleurs, les valeurs de pourcentage transmises aux UE peuvent dépendre du niveau de service à mettre en oeuvre par ces UE. Ainsi, un UE disposant d'un abonnement requérant une qualité de service élevée pourra se voir affecter un pourcentage important de la bande passante, au détriment d'autres UE disposant d'un abonnement requérant une qualité de service plus faible.

Un autre avantage d'un tel mécanisme va être mis en évidence ci-après dans un exemple de réalisation de l'invention où l'UE 1 est en situation de macrodiversité vis-à-vis de son canal E-DCH. On considère donc ci-après que l'UE 1 de la figure 1 souhaite transmettre des données à haut débit sur un canal E-DCH à destination des trois Nodes B 2a, 2b et 2c simultanément. Une telle situation de macrodiversité permet en effet d'améliorer la fiabilité et la qualité de la réception par combinaison des informations reçues par chaque Node B de l'ensemble actif.

Dans un tel cas, chaque Node B possède des critères qui lui sont propres. A titre d'exemple, le niveau d'interférence dans le sens montant mesuré par chacun des Nodes B peut être différent car il dépend notamment des communications en cours avec le Node B correspondant. De même, chaque Node B peut utiliser un récepteur ayant une capacité de réception propre, éventuellement différente des autres Nodes B. En outre, l'utilisation des canaux varie également selon les Nodes B, si bien que la bande passante disponible peut être différente pour chaque Node B à un instant donné. Dans l'exemple décrit ci-après, on considère qu'à un instant d'observation, le Node B 2a a une bande passante disponible de 3 Mbit/s, tandis que le Node B 2b a une bande passante disponible de 4 Mbit/s et le Node B 2c a une bande passante disponible de 2 Mbit/s.

Les bandes passantes disponibles pour chaque Node B de l'ensemble actif avec lequel l'UE 1 est en communication doivent être transmises à cet UE pour lui permettre d'adapter son débit de transmission sur le canal E-DCH en conséquence, comme indiqué plus haut.

A cet effet, chaque Node B peut avantageusement transmettre la bande passante disponible qu'il a déterminée, sur un canal commun, de façon répétée. Par exemple, chaque Node B transmet cette information dans huit tranches temporelles successives d'un S-CCPCH. L'UE 1, de son côté, écoute alternativement les tranches temporelles des différents canaux S-CCPCH qu'il reçoit depuis chacun des Nodes B 2a, 2b et 2c. Grâce à ces répétitions on s'assure que l'UE 1 obtiendra bien les bandes passantes disponibles relatives à chacun des Nodes B, même s'il ne possède qu'un récepteur.

Bien sûr, la répétition de la transmission de la bande passante disponible par chaque Node B peut être effectuée dans tous les cas, c'est-à-dire qu'il existe ou non un UE en situation de macrodiversité.

L'UE 1 peut alors détecter et mémoriser certaines au moins des valeurs de bande passante disponible reçues, en liaison avec le Node B correspondant.

Par la suite, des pourcentages de bande passante disponible sont envoyés à l'UE 1 par chacun des Nodes B. Ces informations sont transmises avantageusement sur un canal dédié descendant. Aucune combinaison de ces informations n'est cependant réalisée au niveau de l'UE 1 de manière à ce que ce dernier puisse recevoir et déterminer la valeur de débit la plus faible parmi les produits du pourcentage et de la bande passante disponible issus de chaque Node B.

L'UE 1 calcule ainsi le débit maximal qu'il est autorisé à utiliser sur son canal E-DCH de façon à ne pas surpasser la capacité de réception de chacun des Nodes B. A cet effet, il peut par exemple calculer un débit maximal relatif à chacun des Nodes B et sélectionner le débit calculé le plus faible. A titre d'exemple, si les pourcentages reçus respectivement depuis les Nodes B 2a, 2b et 2c sont de 40%, 10% et 50%, l'UE 1 détermine alors que le débit maximal à utiliser relativement aux Nodes B 2a, 2b et 2c respectivement est de 1,2 Mbit/s (=40%x3Mbit/s), 0,4 Mbit/s (=10%x4Mbit/s) et 1 Mbit/s (=50%x2Mbit/s). Dans cet exemple, l'UE 1 peut alors choisir d'utiliser un débit de transmission inférieur ou égal à 0,4 Mbit/s sur son canal E-DCH, de façon à ne pas surpasser la capacité de réception du Node B 2b.

## Revendications

1. Procédé de gestion de ressources dans un système de communication comprenant au moins une station de base (2a,2b,2c) apte à communiquer avec des terminaux radio sur des canaux communs et des canaux dédiés selon des débits déterminés, chaque station de base disposant en outre d'au moins une bande passante disponible, en fonction de l'utilisation de certains au moins des canaux communs et des canaux dédiés selon lesdits débits déterminés, pour recevoir des données depuis au moins un terminal radio sur au moins un canal montant dédié à haut débit, le procédé comprenant les étapes suivantes relativement à au moins une station de base :
/a/ déterminer, à la station de base, au moins une bande passante disponible pour recevoir des données depuis au moins un terminal radio (1) sur au moins un canal montant dédié à haut débit;
/b/ transmettre, sur un canal commun descendant, une première indication relative à ladite bande passante disponible; et
/c/ transmettre, pour chaque terminal radio indépendamment, au moins une seconde indication relative à un pourcentage de ladite bande passante disponible à ne pas dépasser par ledit terminal radio lors d'une prochaine transmission sur ledit canal montant dédié à haut débit.

2. Procédé selon la revendication 1, dans lequel le système de communication comprend en outre un contrôleur de réseau radio (3) contrôlant ladite station de base (2a,2b,2c), dans lequel ledit contrôleur de réseau radio détermine les débits pour certaine au moins desdits canaux communs et dédiés et alloue audit terminal radio des ressources aptes à écouler un débit variable sur ledit canal montant dédié à haut débit.

3. Procédé selon la revendication 1 ou 2, dans lequel les étapes /a/ et /b/ d'une part et l'étape /c/ d'autre part sont répétées à des rythmes différents.

4. Procédé selon l'une quelconque des revendications précédentes, dans lequel ladite bande passante disponible est déterminée en tenant compte d'une capacité de réception maximale de ladite station de base.

5. Procédé selon l'une quelconque des revendications précédentes, dans lequel ladite bande passante disponible est déterminée en tenant compte d'au moins un niveau d'interférence estimé à ladite station de base.

6. Procédé selon l'une quelconque des revendications précédentes, dans lequel la transmission, pour chaque terminal radio indépendamment, de ladite seconde indication est effectuée sur un canal dédié descendant respectif.

7. Procédé selon l'une quelconque des revendications précédentes, dans lequel la transmission, sur un canal commun descendant, d'une première indication relative à ladite bande passante disponible est effectuée de façon répétée dans des tranches temporelles successives dudit canal commun descendant.

8. Procédé selon la revendication 7, comprenant en outre les étapes suivantes relativement à un terminal radio (1) communiquant avec plusieurs stations de base (2a,2b,2c) simultanément :
- écouter alternativement, au terminal radio, le canal commun descendant relatif à chacune desdites stations de base, pour obtenir ladite première indication relative à la bande passante disponible pour chacune desdites stations de base ;
- déterminer, au terminal radio, à l'issue de l'étape /c/, le pourcentage de la bande passante disponible pour l'une desdites stations de base, à ne pas dépasser par ledit terminal radio lors d'une prochaine transmission sur ledit canal montant dédié à haut débit.

9. Procédé selon la revendication 8, dans lequel le pourcentage déterminé, à ne pas dépasser par ledit terminal radio lors d'une prochaine transmission sur ledit canal montant dédié à haut débit, est celui qui donne la valeur la plus faible lorsqu'il est multiplié à ladite bande passante disponible pour la station de base correspondante.

10. Procédé selon l'une quelconque des revendications précédentes, dans lequel au moins deux bandes passantes disponibles sont déterminées et transmises sur un canal commun descendant, chaque bande passante disponible étant relative à un niveau de service respectif apte à être mis en oeuvre par le terminal radio.

11. Procédé selon l'une quelconque des revendications précédentes, dans lequel la seconde indication relative à un pourcentage de ladite bande passante disponible transmise, pour chaque terminal radio indépendamment, dépend d'un niveau de service à mettre en oeuvre par ledit terminal radio.

12. Procédé selon l'une quelconque des revendications précédentes, dans lequel ladite station de base couvre plusieurs cellules radio et dans lequel on détermine plusieurs bandes passantes disponibles pour ladite station de base, chaque bande passante disponible étant relative à une desdites cellules radio respectivement.

13. Station de base d'un système de communication comprenant des moyens pour gérer des ressources selon l'une quelconque des revendications précédentes.

14. Terminal radio (1) comprenant des moyens pour communiquer avec au moins une station de base (2a,2b,2c) d'un système de communication et des moyens pour transmettre des données à ladite station de base sur au moins un canal montant dédié à haut débit, ladite station de base étant agencée pour communiquer avec des terminaux radio sur des canaux communs et des canaux dédiés selon des débits déterminés et pour déterminer au moins une bande passante disponible pour recevoir des données depuis au moins un terminal radio sur au moins un canal montent dédié à haut débit, le terminal radio comprenant en outre :
- des moyens pour détecter, sur un canal commun descendant, une première indication relative à ladite bande passante disponible transmise par ladite station de base;
- des moyens pour recevoir au moins une seconde indication relative à un pourcentage de ladite bande passante disponible transmise par ladite station de base ; et
- des moyens pour déterminer, à partir desdites première et seconde indications, un débit maximal à ne pas dépasser lors d'une prochaine transmission sur ledit canal montant dédié à haut débit correspondant.

15. Terminal radio (1) selon la revendication 14, dans lequel les transmissions, par la station de base, desdites première et seconde indication respectivement sont répétées à des rythmes différents.

16. Terminal radio (1) selon la revendication 14 ou 15, dans lequel la seconde indication est transmise par la station de base et reçue par lesdits moyens de réception du terminal radio sur un canal dédié descendant.

17. Terminal radio (1) selon l'une quelconque des revendications 14 à 16, dans lequel, lorsque le canal montant dédié à haut débit correspondant audit terminal radio est reçu simultanément par plusieurs stations de base, la transmission par chaque station de base, sur un canal commun descendant respectif, d'une première indication relative à la bande passante disponible déterminée par ladite station de base est effectuée de façon répétée dans des tranches temporelles successives du canal commun descendant correspondant, et dans lequel les moyens pour détecter ladite première indication relative à la bande passante disponible transmise par chaque station de base comprennent des moyens pour écouter alternativement le canal commun descendant relatif à chacune desdites stations de base respectivement.

18. Terminal radio (1) selon la revendication 17, dans lequel les moyens pour déterminer un débit maximal à ne pas dépasser lors d'une prochaine transmission sur le canal montant dédié à haut débit correspondant comprennent des moyens pour sélectionner le débit maximal correspondant au produit le plus faible entre chaque pourcentage et la bande passante disponible de la station de base correspondante.

19. Terminal radio (1) selon l'une quelconque des revendications 14 à 18, dans lequel ladite station de base est agencée pour déterminer au moins deux bandes passantes disponibles, chaque bande passante disponible étant relative à un niveau de service respectif, dans lequel lesdits moyens pour détecter, sur un canal commun descendant, une première indication sont aptes à détecter une première indication pour chacune des bandes passantes disponibles déterminées, et dans lequel les moyens pour déterminer un débit maximal à ne pas dépasser lors d'une prochaine transmission sur ledit canal montant dédié à haut débit correspondant prennent en compte la première indication détectée relativement à l'une desdites bandes passantes disponibles déterminées en fonction d'un niveau de service à mettre en oeuvre par ledit terminal radio.

## Claims

1. A method for managing resources in a communication system comprising at least one base station (2a,2b,2c) able to communicate with radio terminals on common channels and dedicated channels according to determined throughputs, each base station furthermore having at least one available bandwidth, as a function of the use of some at least of the common channels and of the dedicated channels according to said determined throughputs, for receiving data from at least one radio terminal on at least one high-throughput dedicated uplink channel, the method comprising the following steps in relation to at least one base station:
/a/ determining, at the base station, at least one available bandwidth for receiving data from at least one radio terminal (1) on at least one high-throughput dedicated uplink channel;
/b/ transmitting, on a common downlink channel, a first indication relating to said available bandwidth; and
/c/ transmitting, for each radio terminal independently, at least one second indication relating to a percentage of said bandwidth available not to be exceeded by said radio terminal during a next transmission on said high-throughput dedicated uplink channel.

2. The method as claimed in claim 1, in which the communication system furthermore comprises a radio network controller (3) controlling said base station (2a,2b,2c), in which said radio network controller determines the throughputs for some at least of said common and dedicated channels and allocates said radio terminal resources able to pass a variable throughput on said high-throughput dedicated uplink channel.

3. The method as claimed in claim 1 or 2, in which steps /a/ and /b/ on the one hand and step /c/ on the other hand are repeated at different rhythms.

4. The method as claimed in any one of the preceding claims, in which said available bandwidth is determined by taking account of a maximum reception capacity of said base station.

5. The method as claimed in any one of the preceding claims, in which said available bandwidth is determined by taking account of at least one interference level estimated at said base station.

6. The method as claimed in any one of the preceding claims, in which the transmission, for each radio terminal independently, of said second indication is performed on a respective downlink dedicated channel.

7. The method as claimed in any one of the preceding claims, in which the transmission, on a common downlink channel, of a first indication relating to said available bandwidth is performed repeatedly in successive time slots of said common downlink channel.

8. The method as claimed in claim 7, furthermore comprising the following steps in relation to a radio terminal (1) communicating with several base stations (2a,2b,2c) simultaneously:
- listening alternately, at the radio terminal, to the common downlink channel relating to each of said base stations, to obtain said first indication relating to the available bandwidth for each of said base stations;
- determining, at the radio terminal, on completion of step /c/, the percentage of the available bandwidth for one of said base stations, not to be exceeded by said radio terminal during a next transmission on said high-throughput dedicated uplink channel.

9. The method as claimed in claim 8, in which the determined percentage, not to be exceeded by said radio terminal during a next transmission on said high-throughput dedicated uplink channel, is that which gives the lowest value when it is multiplied with said available bandwidth for the corresponding base station.

10. The method as claimed in any one of the preceding claims, in which at least two available bandwidths are determined and transmitted on a common downlink channel, each available bandwidth relating to a respective service level able to be implemented by the radio terminal.

11. The method as claimed in any one of the preceding claims, in which the second indication relating to a percentage of said available bandwidth transmitted, for each radio terminal independently, depends on a service level to be implemented by said radio terminal.

12. The method as claimed in any one of the preceding claims, in which said base station covers several radio cells and in which several available bandwidths for said base station are determined, each available bandwidth relating to one of said radio cells respectively.

13. A base station of a communication system comprising means for managing resources as claimed in any one of the preceding claims.

14. A radio terminal (1) comprising means for communicating with at least one base station (2a,2b,2c) of a communication system and means for transmitting data to said base station on at least one high-throughput dedicated uplink channel, said base station being designed for communicating with radio terminals on common channels and dedicated channels according to determined throughputs and for determining at least one available bandwidth for receiving data from at least one radio terminal on at least one high-throughput dedicated uplink channel, the radio terminal furthermore comprising:
- means for detecting, on a common downlink channel, a first indication relating to said available bandwidth transmitted by said base station;
- means for receiving at least one second indication relating to a percentage of said available bandwidth transmitted by said base station; and
- means for determining, on the basis of said first and second indications, a maximum throughput not to be exceeded during a next transmission on said corresponding high-throughput dedicated uplink channel.

15. The radio terminal (1) as claimed in claim 14, in which the transmissions, by the base station, of said first and second indication respectively are repeated at different rhythms.

16. The radio terminal (1) as claimed in claim 14 or 15, in which the second indication is transmitted by the base station and received by said means of reception of the radio terminal on a downlink dedicated channel.

17. The radio terminal (1) as claimed in any one of claims 14 to 16, in which, when the high-throughput dedicated uplink channel corresponding to said radio terminal is received simultaneously by several base stations, the transmission by each base station, on a respective common downlink channel, of a first indication relating to the available bandwidth determined by said base station is performed repeatedly in successive time slots of the corresponding common downlink channel, and in which the means for detecting said first indication relating to the available bandwidth transmitted by each base station comprise means for listening alternately to the common downlink channel relating to each of said base stations respectively.

18. The radio terminal (1) as claimed in claim 17, in which the means for determining a maximum throughput not to be exceeded during a next transmission on the corresponding high-throughput dedicated uplink channel comprise means for selecting the maximum throughput corresponding to the lowest product between each percentage and the available bandwidth of the corresponding base station.

19. The radio terminal (1) as claimed in any one of claims 14 to 18, in which said base station is designed for determining at least two available bandwidths, each available bandwidth relating to a respective service level, in which said means for detecting, on a common downlink channel, a first indication are able to detect a first indication for each of the determined available bandwidths, and in which the means for determining a maximum throughput not to be exceeded during a next transmission on said corresponding high-throughput dedicated uplink channel take into account the first indication detected in relation to one of said available bandwidths determined as a function of a service level to be implemented by said radio terminal.

## Patentansprüche

1. Verfahren zur Betriebsmittelverwaltung in einem Kommunikationssystem, das zumindest eine Basisstation (2a, 2b, 2c) umfasst, die geeignet ist, über gemeinsame Kanäle und dedizierte Kanäle in Abhängigkeit von bestimmten Verarbeitungsgeschwindigkeiten zu kommunizieren, wobei jede Basisstation darüber hinaus über zumindest eine verfügbare Bandbreite verfügt, je nach Nutzung zumindest einiger der gemeinsamen Kanäle und der dedizierten Kanäle in Abhängigkeit von den bestimmten Verarbeitungsgeschwindigkeiten, um ab zumindest einem Funkterminal auf zumindest einem dedizierten aufsteigenden Hochgeschwindigkeitskanal Daten zu empfangen, wobei das Verfahren die nachstehenden Etappen im Hinblick auf zumindest eine Basisstation umfasst:
/a/ Bestimmung von zumindest einer verfügbaren Bandbreite in der Basisstation zum Zwecke des Datenempfangs ab zumindest einem Funkterminal (1) auf zumindest einem dedizierten aufsteigenden Hochgeschwindigkeitskanal;
/b/ Übertragung eines ersten Hinweises über diese verfügbare Bandbreite auf einen gemeinsamen abfallenden Kanal und
/c/ Übertragung von zumindest einem zweiten Hinweis über einen Prozentsatz dieser verfügbaren Bandbreite, der von diesem Funkterminal anlässlich einer nächsten Übertragung auf den dedizierten aufsteigenden Hochgeschwindigkeitskanal nicht überschritten werden darf, für jedes Funkterminal unabhängig.

2. Verfahren nach Anspruch 1, wobei das Kommunikationssystem darüber hinaus einen Funknetzkontroller (3) umfasst, der diese Basisstation (2a, 2b, 2c) kontrolliert, bei der dieser Funknetzkontroller die Verarbeitungsgeschwindigkeiten für zumindest einige dieser gemeinsamen und dedizierten Kanäle bestimmt und dem Funkterminal Betriebsmittel gewährt, die geeignet sind, eine variable Verarbeitungsgeschwindigkeit auf dem dedizierten aufsteigenden Hochgeschwindigkeitskanal zu entwickeln.

3. Verfahren nach Anspruch 1 oder 2, wobei die Etappen /a/ und /b/ einerseits und die Etappe /c/ andrerseits in unterschiedlichen Rhythmen wiederholt werden.

4. Verfahren nach einem der vorstehenden Ansprüche, wobei die verfügbare Bandbreite unter Berücksichtigung einer maximalen Empfangsleistung der Basisstation bestimmt wird.

5. Verfahren nach einem der vorstehenden Ansprüche, wobei die verfügbare Bandbreite unter Berücksichtigung von zumindest einem für diese Basisstation veranschlagten Störpegel bestimmt wird.

6. Verfahren nach einem der vorstehenden Ansprüche, wobei die Übertragung des zweiten Hinweises für jedes Funkterminal unabhängig auf einem entsprechenden dedizierten abfallenden Kanal vorgenommen wird.

7. Verfahren nach einem der vorstehenden Ansprüche, wobei die Übertragung eines ersten Hinweises über die verfügbare Bandbreite auf einem gemeinsamen abfallenden Kanal wiederholt und in sukzessiven Zeitbereichen dieses gemeinsamen abfallenden Kanals durchgeführt wird.

8. Verfahren nach Anspruch 7, das ferner die nachstehenden Etappen im Hinblick auf ein Funkterminal (1) umfasst, das mit mehreren Basisstationen (2a, 2b, 2c) zeitgleich kommuniziert:
- wechselseitig Abhören des gemeinsamen abfallenden Kanals im Hinblick auf jede Basisstation auf dem Funkterminal, um diesen Hinweise über die verfügbare Bandbreite für jede Basisstation zu erfassen.
- Bestimmung des Prozentsatzes der verfügbaren Bandbreite für eine dieser Basisstationen nach Etappe /c/ am Funkterminal, die vom Funkterminal anlässlich einer nächsten Übertragung auf diesen dedizierten aufsteigenden Hochleistungskanal nicht überschritten werden darf.

9. Verfahren nach Anspruch 8, wobei der bestimmte Prozentsatz, der von diesem Funkterminal anlässlich einer nächsten Übertragung auf diesen dedizierten aufsteigenden Hochleistungskanal nicht überschritten werden darf, derjenige Prozentsatz ist, der den geringsten Wert ergibt, wenn er mit dieser verfügbaren Bandbreite für die entsprechende Basisstation multipliziert wird.

10. Verfahren nach einem der vorstehenden Ansprüche, wobei zumindest zwei verfügbare Bandbreiten bestimmt und auf einen gemeinsamen abfallenden Kanal übertragen werden, wobei sich jede verfügbare Bandbreite auf ein entsprechendes Serviceniveau bezieht, das für das Funkterminal umgesetzt werden kann.

11. Verfahren nach einem der vorstehenden Ansprüche, wobei der zweite Hinweis über den Prozentsatz dieser übertragenen verfügbaren Bandbreite für jedes Funkterminal unabhängig von einem von diesem Funkterminal umzusetzenden Serviceniveau abhängt.

12. Verfahren nach einem der vorstehenden Ansprüche, wobei diese Basisstation mehrere Funkzellen abdeckt und bei dem für diese Basisstation mehrere verfügbare Bandbreiten bestimmt werden, wobei jede verfügbare Bandbreite jeweils eine dieser Funkzellen betrifft.

13. Basisstation eines Kommunikationssystems, das Mittel zur Betriebsmittelverwaltung nach einem der vorstehenden Ansprüche umfasst.

14. Funkterminal (1), das Mittel zur Kommunikation mit zumindest einer Basisstation (2a, 2b, 2c) eines Kommunikationssystems und Mittel zur Übertragung der Daten auf diese Basisstation auf zumindest einen dedizierten aufsteigenden Hochgeschwindigkeitskanal umfasst, wobei diese Basisstation angeordnet ist, um mit Funkterminals auf gemeinsamen Kanälen und dedizierten Kanälen in Abhängigkeit von den bestimmten Verarbeitungsgeschwindigkeiten zu kommunizieren und um zumindest eine verfügbare Bandbreite zum Zwecke des Empfangs der Daten ab zumindest einem Funkterminal auf zumindest einem dedizierten aufsteigenden Hochgeschwindigkeitskanal zu bestimmen, wobei das Funkterminal unter anderem umfasst:
- Mittel zur Erfassung einer ersten Anzeige über diese verfügbare und von dieser Basisstation übertragende Bandbreite auf einem gemeinsamen abfallenden Kanal;
- Mittel zum Empfang von zumindest einer zweiten Anzeige über einen Prozentsatz dieser verfügbaren Bandbreite, der von der Basisstation übertragen wird, und
- Mittel zur Bestimmung einer maximalen Verarbeitungsgeschwindigkeit, die anlässlich einer nächsten Übertragung auf den entsprechenden dedizierten aufsteigenden Hochgeschwindigkeitskanal nicht überschritten werden darf, auf Grundlage der ersten und zweiten Anzeige.

15. Funkterminal (1) nach Anspruch 14, in dem die Übertragungen besagter erster und zweiter Anzeigen von der Basisstation jeweils in unterschiedlichen Rhythmen wiederholt werden.

16. Funkterminal (1) nach Anspruch 14 oder 15, in dem die zweite Anzeige von der Basisstation übertragen und von diesen Empfangsmitteln des Funkterminals auf einem dedizierten abfallenden Kanal empfangen wird.

17. Funkterminal (1) nach einem der Ansprüche 14 bis 16, wobei bei Empfang des dedizierten aufsteigenden Hochgeschwindigkeitskanals, das diesem Funkterminal entspricht, zeitgleich auf unterschiedliche Basisstationen die Übertragung einer ersten Anzeige über die verfügbare Bandbreite, die von dieser Basisstation bestimmt wird, durch jede Basisstation auf einen jeweiligen gemeinsamen abfallenden Kanal wiederholt in sukzessiven Zeitbereichen des entsprechenden gemeinsamen abfallenden Kanals erfolgt und bei dem die Mittel zur Erfassung dieser ersten Anzeige über die verfügbare Bandbreite, die von jeder Basisstation übertragen wird, jeweils Mittel umfassen, um den abfallenden gemeinsamen Kanal in Bezug auf jede dieser Basisstationen wechselweise abzuhören.

18. Funkterminal (1) nach Anspruch 17, in dem die Mittel zur Bestimmung einer maximalen Verarbeitungsgeschwindigkeit, die anlässlich einer nächsten Übertragung auf den entsprechenden dedizierten aufsteigenden Hochgeschwindigkeitskanal nicht überschritten werden darf, Mittel zur Auswahl der maximalen Verarbeitungsgeschwindigkeit umfassen, die dem geringsten Produkt zwischen jedem Prozentsatz und der verfügbaren Bandbreite der entsprechenden Basisstation entspricht.

19. Funkterminal (1) nach einem der Ansprüche 14 bis 18, in dem besagte Basisstation angeordnet ist, um zumindest zwei verfügbare Bandbreiten zu bestimmen, wobei jede verfügbare Bandbreite einem jeweiligen Serviceniveau entspricht, in dem besagte Mittel zur Erfassung einer ersten Anzeige auf einem gemeinsamen abfallenden Kanal geeignet sind, eine erste Anzeige für jede der bestimmten verfügbaren Bandbreiten zu erfassen und in dem die Mittel zur Bestimmung einer maximalen Verarbeitungsleistung, die anlässlich einer nächsten Übertragung auf diesen entsprechenden dedizierten aufsteigenden Hochgeschwindigkeitskanal nicht überschritten werden darf, die erste erfasste Anzeige hinsichtlich einer der verfügbaren Bandbreiten berücksichtigen, die in Abhängigkeit von einem von diesem Funkterminal umzusetzenden Serviceniveau bestimmt werden.
